**Europäisches Patentamt**

**European Patent Office**

**Office européen des brevets**

(19)

(11) Veröffentlichungsnummer : **0 377 399 B1**

## (12) EUROPÄISCHE PATENTSCHRIFT

(45) Veröffentlichungstag der Patentschrift :
**02.12.92 Patentblatt 92/49**

(51) Int. Cl.$^5$ : **B65G 61/00**, B65H 31/30,
B65G 47/90

(21) Anmeldenummer : **89730222.0**

(22) Anmeldetag : **20.12.89**

(54) **Greifvorrichtung.**

(30) Priorität : **31.12.88 DE 3844503**

(43) Veröffentlichungstag der Anmeldung :
**11.07.90 Patentblatt 90/28**

(45) Bekanntmachung des Hinweises auf die
Patenterteilung :
**02.12.92 Patentblatt 92/49**

(84) Benannte Vertragsstaaten :
**AT BE CH DE ES FR GB GR IT LI NL SE**

(56) Entgegenhaltungen :
**WO-A-86/07579**
**US-A- 4 787 810**

(73) Patentinhaber : **SYSTEM GMBH**
**Monschauer Strasse 1**
**W-4000 Düsseldorf 11 (DE)**

(72) Erfinder : **Tübke, Axel, B., Dipl.-Kfm.Dr.**
**Bayernallee 19**
**W-1000 Berlin 19 (DE)**

(74) Vertreter : **Christiansen, Henning, Dipl.-Ing.**
**Patentanwalt Pacelliallee 43/45**
**W-1000 Berlin 33 (DE)**

**Beschreibung**

Die Erfindung betrifft eine Greifvorrichtung der im Oberbegriff des Anspruchs 1 angegebenen Art.

Eine derartige Greifvorrichtung für einen Palettierroboter ist aus der DE-OS 31 02 431 bekannt. Der bekannte Roboter entspricht in seinem Aufbau einem Industrieroboter, der mit einer Zusatzvorrichtung zum Ergreifen von Packen versehen ist. Er ist als Standgerät ausgebildet, der einen um einen zentralen Fuß schwenkbaren Arm aufweist, an dessen Ende der Greifer befestigt ist. Dieser Greifer weist zwei untere Zinken und ein oberes als Druckplatte ausgebildetes Gegenelement auf, das beim Ergreifen eines Stapels sich in Richtung auf die unteren Zinken bewegt und den Stapel zusammenpreßt.

Nachteilig ist dabei, daß die unteren Zinken eine Länge aufweisen müssen, die im wesentlichen der entsprechenden Querabmessung des Stapels entspricht, um diesen stabil zu halten, wenn dieser nicht die notwendige Eigenstabilität aufweist. Damit ist weiterhin der Nachteil verbunden, daß für unterschiedliche Stapelgrößen jeweils unterschiedliche Greifer verwendet werden müssen, da bei kleinen Stapeln überstehende Zinken ein dicht benachbartes Ablegen der Stapel behindern würden.

Eine weitere Greifvorrichtung zum Transportieren von insbesondere gestapelten Papiersäcken oder Papierschlauchabschnitten ist aus der DE 32 21 351 Al bekannt. Dabei weist die Greifvorrichtung eine horizontale feste Grundplatte und einen der Grundplatte gegenüberliegenden Klemmzylinder auf. Dieser ist auf einer senkrechten Führung gegenüber der Grundplatte verstellbar, geführt sowie arretierbar. Ferner weist die Greifvorrichtung unterhalb der Grundplatte angeordnete, um vertikale Achsen verschwenkbare Tragarme auf, die aus einer Lage neben einen Stapel verschwenkbar sind. Die Greifvorrichtung ist quer zum Stapel und unter den Stapel verfahrbar.

Diese Ausführung hat den Nachteil, daß mit dem Ergreifen und besonders beim Ablegen von Folienstapeln diese verrutschen und durch das Einschwenken der Tragarme möglicherweise beschädigt werden. Ein schadensfreier Transport kann deshalb mit dieser Greifvorrichtung, insbesondere bei Papierfolienstapeln, nicht garantiert werden. Die Tragarme müssen dabei weiterhin eine Länge aufweisen, die im wesentlichen einer entsprechenden Querabmessung des Stapels entspricht, um diesen stabil zu halten, wenn dieser nicht die notwendige Eigenstabilität aufweist. Auch bei dieser bekannten Ausführungsform erfordern unterschiedliche Stapelgrundflächen entsprechend dimensionierte Tragarme. Insbesondere die Anordnung der einschwenkbaren Tragarme nimmt viel Raum ein, so daß der Einsatzbereich der Greifvorrichtung beim Handling auf engem Raum eingeschränkt ist. Nachteilig ist weiterhin der große Steuerungsaufwand, da zum einen die Greifvorrichtung als ganzes, der Klemmzylinder und die Schwenkarme prozeßgerecht angesteuert werden müssen.

Bei einer weiteren aus der WO-A-8 697 579 bekannten Greifvorrichtung zum Transport von Bücherpaketen sind die Tragarme in einer horizontalen Ebene verschiebbar angeordnet. Beim Greifen und zum Abladen eines Bücherpakets werden die Tragarme unter das Bücherpaket geschoben bzw. von unter dem Bücherpaket herausgeschoben. Mittels der vertikalen verstellbarkeit des als Druckplatte ausgebildeten Gegenelements ist der vertikale Abstand zwischen den Tragarmen und das Gegenelement einstellbar und veränderbar und die Höhe des starren Bücherpakets meßbar. Sowohl mit allen bereits beschriebenen als auch mit einer weiteren aus der US-A-4 787 810 bekannten Greifvorrichtung ist aber die maximale Grundfläche des mit der Greifvorrichtung handhabbaren Stapels durch die Länge der Tragarme begrenzt.

Der Erfindung liegt die Aufgabe zugrunde, bei einer Greifvorrichtung der eingangs genannten Gattung auch bei flexiblen Stapeln folienförmigen Guts mit Greiferzinken, die wesentlich kürzer als die Querabmessung des Stapels sind, ein stabiles Halten und einen sicheren Transport zu ermöglichen.

Diese Aufgabe wird mit den kennzeichnenden Merkmalen des Anspruchs 1 gelöst.

Die Erfindung beruht auf der Erkenntnis, daß durch die mit den getroffenen Maßnahmen erzielte Wölbung des Stapels um eine parallel zur Zinkenrichtung gerichtete Achse eine stabilisierte Position des Stapels auch dann erreicht wird, wenn dieser nicht miteinander verbundene Lagen oder eine größere Höhe aufweist.

Besonders vorteilhaft bei der Erfindung ist dabei, daß die gefundene Greiferkonstruktion mit verschiedenen Robotertypen universell einsetzbar ist und eine schnelle Umlagerung des Transportgutes durch kurze Zugriffszeiten ermöglicht.

Bei einer bevorzugten Weiterbildung der Erfindung sind die beiden Zinken unterhalb des Gegenelements angeordnet, so daß beim Ablegen eines Papier- oder sonstigen Stapels der mittlere (druchhängende) Bereich zuerst Kontakt mit der Unterlage erhält und ein Nachsinken der Randbereiche nach der weiteren Freigabe sehr schnell erfolgen kann, da auf diese Weise die im und unter dem Stapel befindliche Luft unverzüglich entweichen kann. Die Seitenbereiche brauchen auch beim Ablegen auf der Unterlage keine Gleitbewegung auszuführen, was verbleibende Welligkeiten der unteren Lagen im Stapel zur Folge haben kann.

Wenn die beiden Zinken und das Gegenelement derartig angetrieben sind, daß sie beim Greifen bzw. Lösen gleichzeitig Relativbewegungen aufeinander zu bzw. voneinander weg ausführen, werden die Zugriffs- und Freigabezeiten gleichfalls verkürzt.

Der Zugriff gestaltet sich besonders günstig, wenn die Zinken um eine erste Drehachse angetrieben schwenkbar sind, die parallel zu einer die ersten beiden Zinken senkrecht schneidenden Verbindungslinie gerichtet und in Richtung auf das Gegenelement verschoben ist. Bevorzugt ist dabei die Verbindung der Zinken mit der Gabelstange mit einem Gelenk versehen, so daß die Zinken passiv in Richtung auf das Gegenelement schwenkbar sind, in der Gegenrichtung aber in der horizontalen Position durch einen Anschlag begrenzt sind. Auf diese Weise ist trotz der Schwenkbewegung der unteren Zinken um eine horizontale Achse beim Freigeben des Stapels oder vor dessen Ergreifen gewährleistet, daß die freien Enden der Zinken nicht auf der Unterlage "schrammen". Ein entsprechendes Ergebnis wird auch durch einen geringfügigen mit der Schwenkbewegung koordinierten Hub des gesamten Greiferträgers erzielt.

Ein an der dem freien Ende der Zinken gegenüberliegenden Seite relativ zur Zinkenbewegung festehender Anschlagbereich, der sich in Richtung auf eine zweite Drehachse erstreckt, hält den Stapel durch seitlichen Anschlag in seiner Position, wenn die unteren Zinken zur Freigabe in Richtung nach hinten/unten geschwenkt werden, so daß ein positionsgenaues Absetzen des Stapels gewährleistet ist.

Wenn der Zinkenquerschnitt abgeschrägt ausgebildet ist, wobei die Abschrägung in einem Bereich der Kante vorgesehen ist, der sowohl dem jeweils anderen Zinken als auch dem Gegenelement zugewandt ist, kann ein Aufnehmen und Absetzen auch in Schräglagen, angepaßt an die jeweilige Zuliefer- oder Abnahmestation, erfolgen.

Dadurch, daß eine mit einer oberen Abschrägung verbundene Querschnittsverringerung zum freien Ende der Zinken hin, vorgesehen ist, werden diese beim Zugreifen in eng ausgesparte Bereiche selbsttätig zentriert und geführt.

Dadurch, daß der Greifer in bevorzugter Weiterbildung eine Anschlußvorrichtung in Form einer Schnellkupplung aufweist, ist eine Anpassung an anders geartete Transportaufgaben ohne langwierige Umbauarbeiten möglich.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a ein erstes Ausführungsbeispiel der Erfindung in Seitenansicht,
Figur 1b das Ausführungsbeispiel gemäß Figur 1a in Draufsicht,
Figur 2 einen Greifer als Detail des Ausführungsbeispiels gemäß Figuren 1a und 1b in perspektivischer Darstellung,
Figur 3a Zwischenlagen für zu palettierendes Gut als Detail im Schnitt,

Figur 3b die Zwischenlagen gemäß Figur 3a in der Draufsicht,
Figur 4a den Greiferbereich des Ausführungsbeispiels gemäß Figur 1a in der Grundposition,
Figur 4b den Greiferbereich gemäß Figur 4a in einer geneigten Position zur Aufnahme oder zum Ablegen eines Stapels sowie
Figur 5 ein Blockschaltbild einer Steuerschaltung für das Ausführungsbeispiel gemäß Figur 1a.

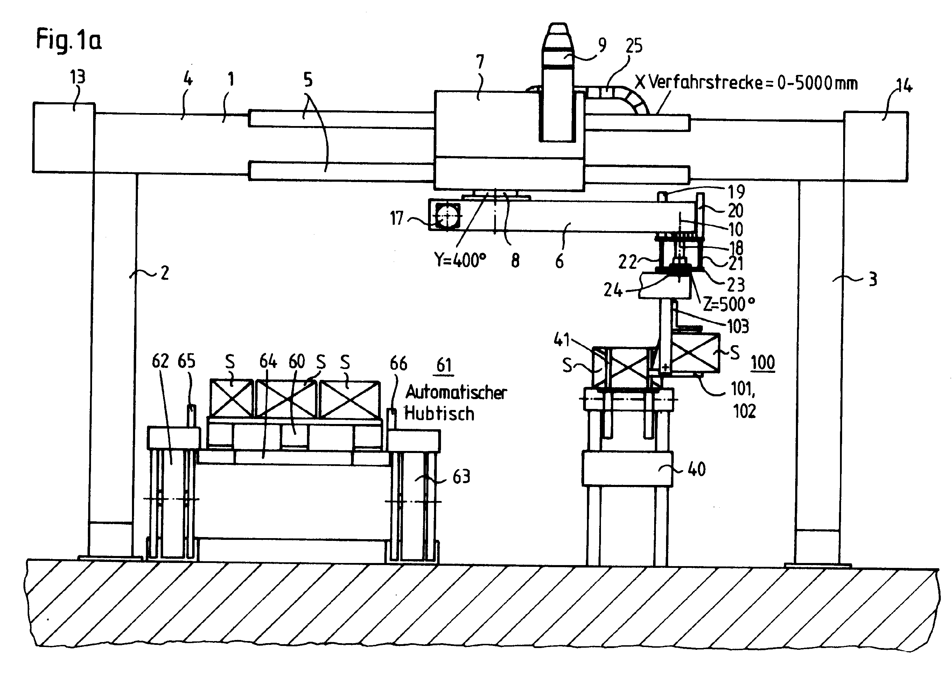

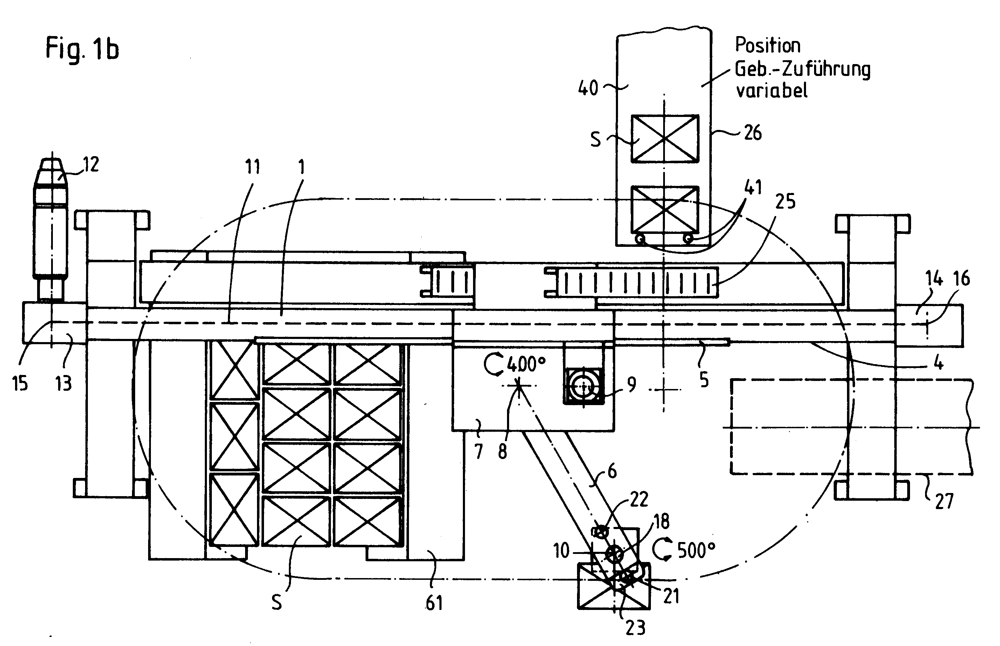

Bei dem in den Figuren 1a und b in der Seitenansicht bzw. in der Draufsicht dargestellten bevorzugten Ausführungsbeispiel der Erfindung erstreckt sich eine Traverse 1 über den Arbeitsbereich. An ihren Enden ist sie mit zwei Auflagern 2 und 3 in Form von Ständern verbunden, wobei die Auflager 2 und 3 mindestens die Höhe des notwendigen Bearbeitungsraumes aufweisen.

An einer Seite 4 der Traverse 1 ist eine Fahrbahn 5 angeordnet, die die Länge des seitlichen Verfahrweges eines Arms 6 aufweist. Mittels einer Führungsvorrichtung 7 ist der an einer Drehvorrichtung 8, mit einem möglichen Drehwinkel von 400°, aufgehängte Arm 6 in Richtung der Traverse 1 verschieblich gelagert. Der Antrieb der Drehvorrichtung 8 erfolgt elektrisch durch einen Motor 9, der mit einem Gehäuse der Führungsvorrichtung 7 verschraubt ist.

Den Antrieb für eine Verschiebebewegung in Richtung der Traverse 1 erhält die Führungsvorrichtung 7 über einen in der Zeichnung nicht sichtbaren, aber in Figur 1b strichliniert angedeuten, Zahnriemen 11 von einem Motor 12. Der Zahnriemen 11, der innerhalb der Traverse 1 verläuft, spannt sich von dem einen Antriebsgehäuse 13, an dem der Motor 12 angeordnet ist, bis zu einem Antriebsgehäuse 14, das am gegenüberliegenden Ende der Traverse 1 mit dieser verbunden ist. Der Zahnriemen 11 ist über ein Zahnrad 15 beim Motor 12 zur Führungsvorrichtung 7 geführt. Hier ist der Zahnriemen 11 mit der Führungsvorrichtung 7 derart verbunden, daß sich mit dem Bewegen des Zahnriemens 11 die Führungsvorrichtung 7 gleichzeitig mitbewegt. Im Anschluß an die Führungsvorrichtung 7 verläuft der Zahnriemen 11 über eine hier nicht sichtbare Umlenkrolle 16, die im Antriebsgehäuse 14 gelagert ist, zurück zum Motor 12.

Der Arm 6 ist an seinem freien Ende mit einer Drehvorrichtung 10 versehen, an der eine Greifvorrichtung 100 angebracht ist. Der Antrieb der Drehvorrichtung 10 erfolgt mit einem Motor 17, der an der der Drehvorrichtung 10 gegenüberliegenden Seite des Arms angebracht ist, wobei die Kraftübertragung von dem Motor 17 auf die Drehvorrichtung 10 über einen weiteren Zahnriemen erfolgt. Die Kraft wird dann weiter von der Drehvorrichtung 10 über eine Welle 18 auf die Greifvorrichtung 100 übertragen, wobei die Welle 18 um einen vorgegebenen Hub in senkrechter Richtung verschiebbar ist.

In der Nachbarschaft zur Welle 18 sind zwei den zwei Druckluftzylindern 19 und 20 zugeordnete Hubstangen 21 und 22 angeordnet. Die Druckluftzylinder 19 und 20 sind in paralleler Anordnung mit dem freien Ende des Armes 6 verbunden und die Hubstangen sind in Richtung der Greifvorrichtung 100 verfahrbar. An dem den Druckzylindern 19 und 20 gegenüberliegenden Enden der Hubstangen 21 und 22 ist eine Hubplatte 23 angeordnet, die mit einer Anschlußvorrichtung 24 der Greifvorrichtung 100 mit der Welle 18 verbunden ist. Der maximale Hub ist durch die Differenz der eingerückten Stellung und der maximal ausfahrbaren Stellung der Hubstangen 19 und 20 vorgegeben.

Die Führungsvorrichtung 7, der Motor 9 und der Motor 17, sowie die Bewegungsvorrichtungen für den Greifer 100 sind durch einen Kabelstrang mit der Steuervorrichtung verknüpft, wobei der Kabelstrang in der Traverse in einer gegliederten Leiste 25 geführt ist.

Durch die wenigen Gelenke im Palettierroboter ist die Palettierungsgeschwindigkeit unter Wahrung eines großen Zugriffsbereichs hoch. Der Arm 6 ist starr ausgebildet und besteht bevorzugt aus einem kastenförmigen Alumiumprofil.

Die um eine vertikale Achse rotierende einzige Drehvorrichtung 8 des starren Arms 6 ermöglicht zusammen mit der horizontalen Führungsvorrichtung 7 des drehgelagerten Endes des Arms 6 ein schnelles und präzises Bewegen des Arms 6 mit der Greifvorrichtung 100 in einem großen Arbeitsbereich. Zum Ausgleich der unterschiedlichen, durch Verwerfungen oder durch Toleranzen der Stapelhöhen enstehenden Ablage- bzw. Aufnahmeflächen beim Palettieren bzw. Depalettieren, ist die Greifvorrichtung 100 um den vertikalen Hub von wenigen Zentimetern verschieblich durch die vertikal gerichteten Hubstangen 21 und 22 ausgebildet. Die Hubstangen 21 und 22 bilden eine einfache vertikale Hilfsführung der Greifvorrichtung 100, wobei die vertikale Ausgleichsbewegung der Greifvorrichtung 100 die hohe Palettierungsgeschwindigkeit, aufgrund des geringen Bewegungsumfangs, nicht beeinträchtigt.

In den Figuren 1a und b ist ein Längsförderer 40 dargestellt, der einen Druckerzeugnisstapel S antransportiert und der an seinem Ende eine Anschlagvorrichtung 41 aufweist. Er ist im Schwenkbereich des Arms 6 angeordnet. Vom Ende des Längsförderers 40 wird der Stapel S von der Greifvorrichtung 100 aufgenommen. Dabei fahren die unteren ersten Zinken 101 und 102 in die in dem Längsförderer vorgesehenen Ausnehmungen unter dem an der Anschlagvorrichtung angeordneten Stapel S. Die unteren beiden ersten Zinken 101 und 102 drücken gleichzeitig mit dem zweiten Zinken 103, der in Form eines Preßbackens ausgebildet ist, den Stapel S zusammen. Anschließend verfahren die Druckzylinder 19 und 20 die Hubstangen 21 und 22 soweit nach oben, bis die Höhe der Anschlagvorrichtung 41 überwunden ist. Bei dem Stapel S kann es sich bei dem dargestellten Ausführungsbeispiel um lose oder verbundene Stapel von Zeitschriften oder um Sammelhefter handeln.

Der Stapel wird nun mit einer koordinierten Bewegung der Führungsvorrichtung 7, der Drehvorrichtung 8, des Arms 6, der Drehvorrichtung 10, der Greifvorrichtung 100 und der Hubstangen 21 und 22 in Richtung auf eine Palette 60 bewegt, die auf einem vertikal um die gewünschte Stapelhöhe verfahrbaren Hubtisch 61 angeordnet ist. Der Hubtisch 61 ist dabei innerhalb des maximalen Verfahr- und/oder Drehbereiches des Palettieroboters angeordnet.

Der Hubtisch 61 weist eine zwischen Ständern 62 und 63 vertikal bewegliche Platte 64 auf, die eine Palette 60 trägt, auf der sich wiederum Stapel S befinden. Mit den Ständern verbunden ist ein Lichtsender 65 und ein Lichtempfänger 66 einer Lichtschranke, deren Lichtstrahl den Hubtisch in der Höhe des Zugriffsbereichs der unteren, ersten Zinken des Greifers überquert. Der Lichtstrahl ist zwischen mehreren Umlenkpunkten gespiegelt bzw. so geführt, daß er den gesamten Bereich der Palette mit einem maximalen Strahlabstand erfaßt, der kleiner ist als die kleinste Querabmessung eines zu erfassenden Stapels. Ist eine Lage abgeräumt, d.h. wenn alle Fördervorgänge für ein Palettierungsmuster ausgeführt sind, hebt sich der Tisch durch das von der Lichtschranke abgegebene Signal wegen des nun freien Lichtwegs um eine Stapelhöhe. Beim Palettieren senkt sich nach dem Beladen einer Ebene entsprechend dem Palettierungsmuster die Platte 64 bis der Lichtweg wieder frei ist.

Wie in Figur 1b dargestellt ist, sind zwei mögliche Positionen 26 und 27 des Längsförderers vorgeben. Die Palettierung erfolgt nach einem vorgegebenen Schema, das der Roboter nacheinander abfährt und die Stapel an den vorgegebenen Plätzen ablegt, wobei der Hubtisch 61 immer dann nach unten, um die Höhe eines Stapels S, verfährt, wenn eine Lage mit Stapeln S auf die Palette 60 aufgebracht wurde. Der Vorgang wiederholt sich so oft, bis eine gewünschte Höhe der Palettenbeladung erreicht ist. Anschließend senkt sich der Hubtisch vollends ab und setzt die Palette auf ein hier nicht eingezeichnetes FTS (Fahrerloses Transport System) ab. Das FTS fährt die Palette aus dem Bearbeitungsraum heraus und ein weiteres FTS fährt eine unbeladene Palette 60 in den Hubtisch 61 hinein und dieser Transportvorgang als Teil der sogenannten "Palettierung" erfolgt von Neuem.

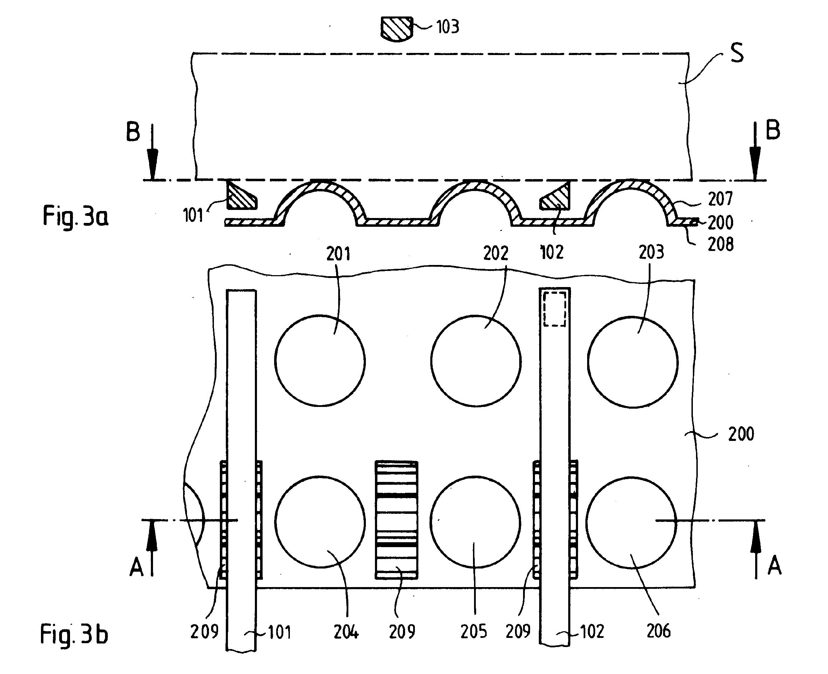

Ebenso kann der Ablauf auch umgekehrt, im Zuge einer Depalettierung erfolgen, so daß die Stapel S von der Palette 60 auf den Längsförderer 40 bewegt werden. Voraussetzung für das Ergreifen von gestapeltem Gut sind aber Zwischenlagen 200, die anhand von Figur 3a und b beschrieben sind.

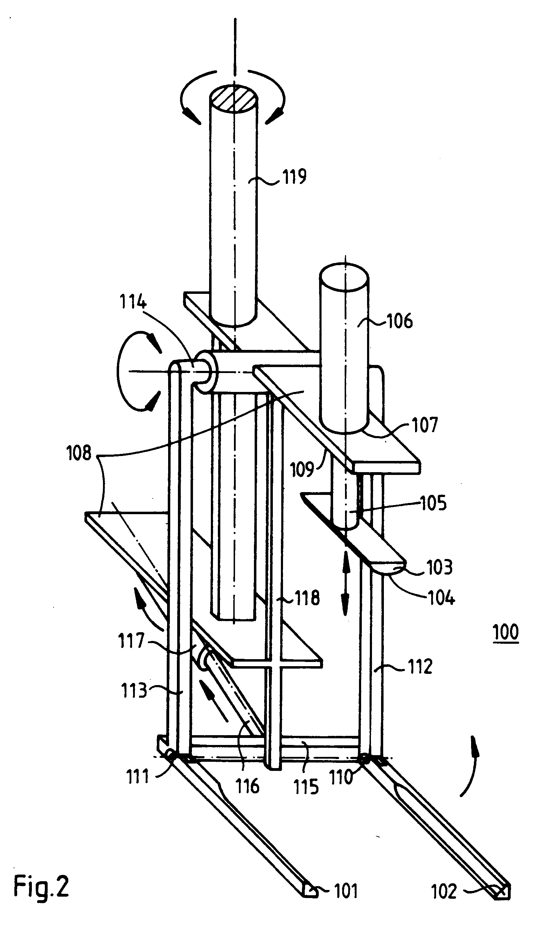

Bei der in Figur 2 perspektivisch dargestellten Greifvorrichtung des bevorzugten Ausführungsbeispiels sind zwei erste Zinken 101 und 102 in einem festen Abstand angeordnet und ein ein Gegenelement bildender zweiter Zinken 103, in Bezug auf die gegenüberliegenden ersten Zinken 101 und 102, in einer Bewegungsebenbene verschieblich, die mittig zwischen den beiden ersten Zinken 101 und 102 liegt.

Der zweite Zinken 103 ist in Form eines Preßbackens derart ausgebildet, daß seine Auflagefläche 104 eine konvexe Wölbung in Richtung der ersten Zinken 101 und 102 aufweist. Der zweite Zinken 103 ist an der der Auflagefläche gegenüberliegenden Seite mit einer Zug/Druckstange 105 verbunden, die in einem Druckzylinder 106 verschieblich endet. Der Druckzylinder 106 ist in einer Aussparung 107 im Greifergehäuse 108 angeordnet und mit einem Greifergehäuse 108 derart verbunden, daß seine hier nicht sichtbare Stirnfläche mit der in Richtung auf den zweiten Zinken 103 zeigenden Fläche 109 des Greifergehäuses bündig abschließt.

Die beiden ersten Zinken 101 und 102 sind in Form von Greiferleisten ausgebildet, wobei sie seitlich an einander zugewandten Flächen in ihrem oberen Bereich abgeschrägt sind. Der Neigungswinkel der Abschrägung ist in Anpassung an das zu palettierende Gut unterschiedlich ausgebildet. Die Zinken 101 und 102 sind beginnend beim Scharniergelenk in Richtung auf das freie Ende und von der Greiferleistenfläche, die zum zweiten Zinken zeigt, in Richtung auf die gegenüberliegende Greiferleistenfläche, abgeschrägt. Die beiden ersten Zinken 101 und 102 sind mit Scharniergelenken 110 und 111 mit den Enden von parallel zueinander angeordneten Gabelstangen 112 und 113 verbunden. Die Scharniergelenke 110 und 111 sind eingeschränkt klappbar ausgebildet, so daß die beiden ersten Zinken 101 und 102 nur in Richtung des zweiten Zinkens 103 klappbar sind. Die Gabelstangen 112 und 113 sind an ihrem anderen Ende durch eine quer zu den Gabelstangen 112 und 113 verlaufende Lagerstange 114 miteinander verbunden, die in dem Greifergehäuse 108 scharnierartig gelagert ist. Auf der den ersten Zinken 101 und 102 gegenüberliegenden Seite, in Fortsetzung der Scharniergelenke 110 und 111 der beiden ersten Zinken 101 und 102, ist eine Querstrebe 115 mit den Gabelstangen 112 und 113 verbunden. In der Mitte der Querstrebe 115 ist an einem drehbaren, hier nicht sichtbaren Gelenk eine Hubstange 116 angeordnet. Sie verläuft in Richtung auf einen am Greifergehäuse 108 angeordneten Druckzylinder 117 und endet darin verschieblich. Der Druckzylinder 117 ist an einem hier nicht sichtbaren Gelenk drehbar am Greifergehäuse 108 aufgehängt.

Zwischen den beiden Gabelstangen 112 und 113 befindet sich ein Abstreifer 118, der parallel zur Bewegungsachse des zweiten Zinken 103 angeordnet ist und senkrecht zur Ebene, die die beiden ersten Zinken 101 und 102 in nicht gekipptem Zustand einnehmen, steht.

Das Greifergehäuse 108 hat eine Anschlußstange 119 an der eine in der Zeichnung verdeckte Kupplung für einen Palettierroboter angebracht ist. Unterhalb der Kupplung, in Richtung auf das Greifergehäuse 108, weist die Anschlußstange 119 eine hier nicht sichtbare Drehvorrichtung in Bezug auf eine vertikale Achse, die mittig in der Anschlußstange angeordnet ist, auf. Ebenso unterhalb der Kupplung weist die Anschlußstange 119 eine hier nicht sichtbare Klappvorrichtung in Bezug auf eine horizontale Achse unterhalb der Drehvorrichtung auf. Dadurch kann die Greifvorrichtung um mindestens 360° gedreht und in, gegen und seitlich zur Richtung der freien Enden der Zinken 101 bis 103 geklappt werden. Die Anschlußstange 119 ist auf der Seite des Greifergehäuses angeordnet, an der sich auch der Druckzylinder 106 befindet und liegt in der Ebene, die der zweite Zinken 103 bei seiner Bewegung durchläuft.

In der Darstellung gemäß Figur 2 sind die Bewegungsachsen des Greifers erkennbar. Dabei führt das Greifen oder Lösen des Greifers und damit das Aufnehmen und Ablegen von Stapeln zu folgendem Bewegungsablauf. Der Greifer wird vom Roboter derart zu dem zu greifenden Stapel gefahren, daß die beiden ersten Greiferzinken 101 und 102 unter dem Stapel und der Greiferzinken 103 über dem Stapel angeordnet sind. Der Stapel liegt dann auch beim Abstreifer 118 an und gleichzeitig mittig in Bezug auf die beiden ersten Zinken 101 und 102 und dem zweiten Zinken 103.

Anschließend wird die Greifvorrichtung insgesamt angehoben und gleichzeitig der zweite Zinken mit der doppelten Geschwindigkeit des Hubs der Greifvorrichtung in Richtung der beiden ersten Zinken 101 und 102 gedrückt. Dadurch ergreifen die Zinken 101 bis 103 gleichzeitig den Stapel. Mit Erreichen eines vorgegebenen Greifdrucks und einer vorgegebenen den Stapel stabilisierenden Wölbung wird die Greifvorrichtung durch einen Roboter und/oder eine Fördervorrichtung an den Ablegeort gefahren.

Die Greifvorrichtung wird nun durch das in der Zeichnung nicht sichtbare Drehgelenk an der Anschlußstange 119 in die gewünschte Ablegerichtung gedreht und durch eine ebenfalls über die Anschlußstange 119 übertragene Senkbewegung auf eine vorgegebene Ablagehöhe, die sich unmittelbar über der Zwischenlage 200 befindet, gefahren. Die Gabelstangen 112 und 113 werden nun über die Querstange 115 und über die Hubstange 116, die in den Druckzylinder einfährt, vom Stapel weg in die entgegengesetzte Richtung um die erste Drehachse 121 der Lagerstange 114 gekippt. Dadurch kann die Stapelunterseite sich vollständig am Stapelort absetzen. Um beim Zurückkippen der Gabelstangen 112 und 113 ein Beschädigen der Zwischenlagen durch die beiden ersten Greiferzinken 101 und 102 zu verhindern, klappen die beiden ersten Greiferzinken 101 und 102 um die zweite Drehachse, die durch die scharnierartigen Gelenke 110 und 111 geht, aufwärts.

In den Figuren 3a und b ist in einem Querschnitt A-A und einer Draufsicht eine Zwischenlage des erfindungsgemäßen Ausführungsbeispiels dargestellt. Die Zwischenlage 200 erstreckt sich jeweils über eine gesamte Palette und bildet eine Unterlage, welche einen Zugriff des Greifers zum Depalettieren der einzelnen Stapel ermöglicht. Nach dem Abräumen einer gesamten Lage wird die Zwischenlage entfernt. Sie ist wiederverwendbar und weist insbesondere die für den Zugriff des Greifers notwendigen Informationen, insbesondere über das Palettierungsmuster auf, so daß eine Depalettierung automatisch erfolgen kann, wenn die betreffende Information gelesen wurde, ohne daß der Roboter die Positionen der einzelnen Stapel erkennen muß. Die Codierungen der Zwischenlagen geben andererseits auch bei der Palettierung die Palettierungsmuster vor, so daß auch hier keine weiteren Steuermaßnahmen erforderlich sind. Für jedes Palettierungsmuster ist lediglich eine besondere, die entsprechenden Codierungen aufweisende, Sorte von Zwischenlagen erforderlich.

Die Zwischenlage weist Erhebungen 201 bis 206 auf, wobei die Erhebungen 201 bis 206 in Form von Noppen ausgebildet sind, in deren Zwischenräume die Greiferzinken von den vier Seitenkanten her einfahren können. Der Abstand und die Höhe der Noppen ist auf die Greiferzinken abgestimmt. Den Noppen 201 bis 206 an der Oberseite 207 sind Vertiefungen der Unterseite 208 zugeordnet, so daß die Zwischenlagen stapelbar und ineinanderfügbar sind. Die Oberfläche ist glatt ausgebildet, so daß die Zwischenlagen mittels Sauger transportierbar sind. An der Oberseite 207 der Zwischenlagen 200 sind Strichcodierungen 209 mittig zwischen den Noppen angeordnet sind. Die Codierungen enthalten Informationen über die Position der Greifvorrichtung 100 und den Palettier- und Depalettierungsablauf und werden von einer Lesevorrichtung, die unterhalb der Greiferleiste 102 angeordnet ist, beim Einfahren erfaßt. Bei in Richtung der Greiferbewegung lesbaren Strichcodes sind zusätzliche Antriebsmittel zur Erzeugung der Relativbewegung zwischen Codierung und Abtastvorrichtung entbehrlich.

Für den Depalettiervorgang von Stapeln sind die Zwischenlagen Voraussetzung. Die Greifvorrichtung 100 wird mit seinen Zinken 101 bis 103 derart an den Stapel gefahren, daß die beiden ersten Zinken 101 und 102 unter dem Stapel und jeweils mittig zwischen den Noppen angeordnet sind und der zweite Zinken 103 sich über dem Stapel befindet. Gleichzeitig befindet sich der Stapel mittig zwischen den beiden ersten Zinken 101 und 102 und dem zweiten Zinken 103. Die ersten Zinken untergreifen den zu depalettierenden Stapel S und können sich aus der Zwischenlage frei nach oben entfernen. Die Zwischenlage verbleibt auf der Unterlage und wird nach dem Abräumen einer Stapellage entfernt. (Der Transportvorgang insgesamt verläuft dem anhand von Figur 1 beschriebenen Palettiervorgang entsprechend, beginnend mit der Stapelaufnahme bis zur Stapelablage.)

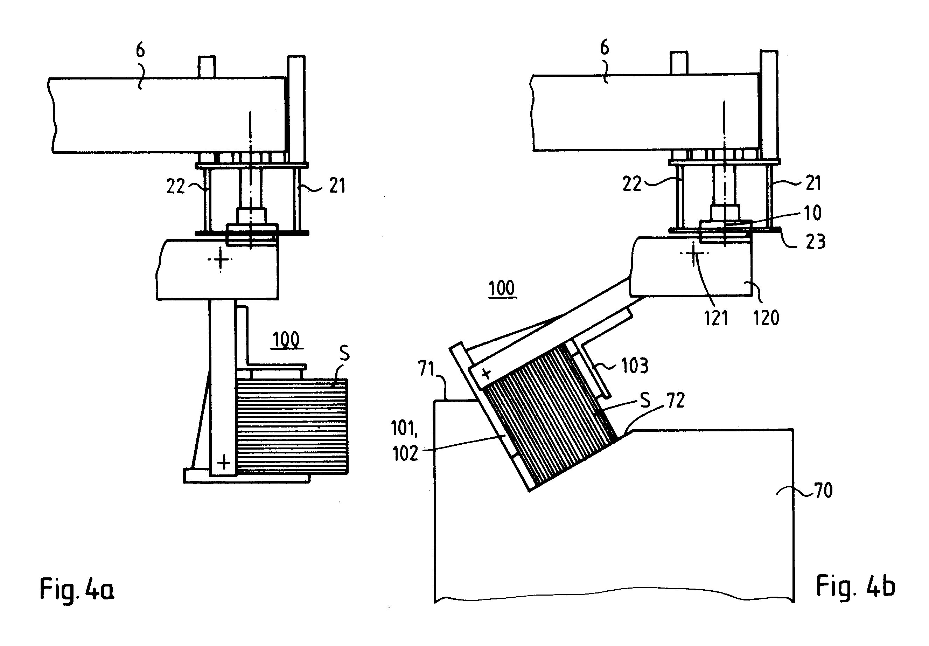

Der Palettier- und der Depalettiervorgang wurde anhand von Figur 1 zwischen einem Längsförderer 40 und einer Palette 60 dargestellt. Der Palettierroboter kann aber auch weitere Stapelaufnahme- und Stapelablagepositionen von unterschiedlichen Verarbeitungsmaschinen bedienen. Ferner kann er in die unterschiedlichen Fertigungs-, Binde- und Versandstraßen integriert werden. Eine derartige bevorzugte Möglichkeit soll nachstehend anhand der Figuren 4a und b näher erläutert werden. Der erfindungsgemäße Palettierroboter beschickt bzw. entsorgt hier einen schematisch dargestellten Sammelhefter 70. Der Stapel wird von einer hier nicht sichtbaren Palette 60, die Zwischenlagen 200 zwischen den Stapellagen aufweist, in der anhand von Figur 1, 2 und 3 beschriebenen Art der Stapelaufnahme von dem Greiferzinken 101 bis 103 aufgenommen und gemäß Figur 4a in einer koordinierten Bewegung der Führungsvorrichtung 7, Drehvorrichtung 8, des Arms 6 und der Drehvorrichtung 10 zum Sammelhefter 70 gefahren.

Die Stapel sind im Sammelhefter in einer gegenüber der Horizontalen geneigten Position angeordnet worden. Die Hubstangen 21 und 22 verfahren die Greifvorrichtung 100, um den Betrag den die Sammelhefteroberseite 71 höher liegt als die Stapellagenoberseite auf der Palette 60, in Richtung Hubplatte 23. Die Greifvorrichtung 100 ist in einer Klappvorrichtung 120 gelagert, so daß die Greifvorrichtung 100 um die horizontal verlaufende erste Drehachse 121 schwenkbar ist. Die Greifvorrichtung 100 wird gleichzeitig mit der Hubbewegung der Hubstangen 21 und 22 um die horizontal verlaufende erste Drehachse 121 in Richtung der den freien Enden der Zinken gegenüberliegenden Seiten in den Neigungswinkel der Ablage gedreht. Anschließend senken die Hubstangen 21 und 22 die Greifvorrichtung 100 in Richtung auf den Sammelhefter soweit ab, bis der Stapel auf der geneigten Sammelhefteroberseite 72 aufliegt. Dann lösen sich die Greiferzinken 101 bis 103 in der anhand von Figur 1 beschriebenen Art der Stapelablage.

Die in den Figuren 4a und b schematisch dargestellte Sammelhefter bildet lediglich ein Beispiel eines Ablage- oder Aufnahmeorts für zu transportierende Stapel. Die Zufuhr in die oder die Abfuhr aus der dargestellten geneigten Position kann bevorzugt auch in aufgefächerter Form erfolgen. Der betreffende Ablage- oder Aufnahmeort wird bevorzugt auch durch einen sogenannten Kreuzleger oder eine Anpreßstation gebildet.

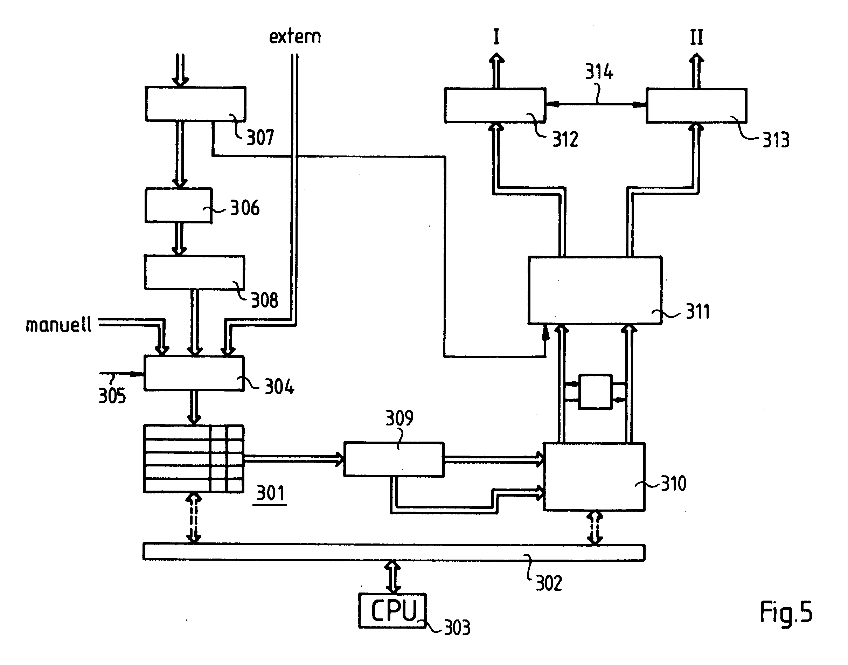

In Figur 5 ist die Steuerung des erfindungsgemäßen Palettierroboters im Blockschaltbild wiedergegeben.

In einem Programmspeicher 301 sind Anweisungen für vollständige Palettierungs- bzw. Depalettierungsvorgänge als Folge von Transportbefehlen abgespeichert. Jeder anwählbare Speicherbereich enthält eine Folge von Transportbefehlen, die bei Anwahl des entsprechenden Speicherbereichs der Reihe nach abgearbeitet werden. Diese Befehle enthalten zugeordnete Informationen, die mit der Auswahl der Befehle zum Zugriff freigegeben werden. Diese Informationen betreffen die Ausführungszeit des betreffenden Transportbefehls und bei Systemen, bei denen mehrere Greiferarme zur Ausführung desselben Transportauftrags herangezogen werden können, eine Zuordnungskennung, welche den betreffenden Transportbefehl definitiv einem Greiferarm zuweist, oder die Ausführung mehreren oder allen Greiferarmen freistellt, so daß durch Aufgabentausch eine Geschwindigkeitsoptimierung erzielbar ist. Die einzelnen Bereiche für die Befehlssequenzen sind im Blockbild des Speichers 301 symbolisch durch Kästchen dargestellt, wobei jeder der vertikal übereinander als Rechteck dargestellten Befehlssequenz in horizontaler Folge die zugeordneten Informationen (kleine Quadrate) zugefügt sind. Jede für sich adressierbare Befehlssequenz besteht aber physikalisch aus einer Folge von Befehlen, denen die betreffenden Informationen einzeln zugeordnet sind.

Jede Befehlssequenz ist damit auch einem Palettierungsschema zugeordnet, daß durch die Folge der Transportanweisungen Aufschluß gibt über die Verteilung des Ladeguts auf der Palette, sowohl beim Palettieren als auch beim Depalettieren. Auf diese Weise kann - unabhängig von der Größe und Anzahl der zu ladenden Stapel - stets eine gleichmäßige Packung erzielt werden, die insbesondere an die Ränder der Paletten angrenzt, so daß ein stabiler Stapel erzeugt wird. Das entsprechende gilt für die Warenzufuhr- oder Entnahme in Produktions- und Lagerbereichen.

Der Speicher 301 ist in einem Mikroprozessor oder sonstigem Computersystem über einen Bus 302 mit einer CPU 303 verbunden. Durch die CPU werden die nachfolgend zu beschreibenden Datenübertragungen ausgeführt. Die entsprechenden Verbindungswege sind in Figur 5 der Übersichtlichkeit halber direkt dargestellt. Bei einem speicherprogrammierbaren System wird der betreffende Datenaustausch aber ebenfalls durch die CPU 303 über den Bus 302 veranlaßt.

Die Adressierung des Speichers erfolgt über einen Auswahlschalter 304, der mit verschiedenen Eingängen versehen ist, die über ein Betätigungselement 305 manuell wählbar sind. Hierbei ist zunächst eine manuelle Adresseneingabe möglich (linker Eingangskanal), um durch direkte Schaltbetätigung Palettierungsmuster für die Depalettierung oder Palettierung vorzugeben. Über den rechten Eingangskanal ist entsprechend eine Ferneingabe mit Mitteln der Datenfernverarbeitung oder über ein zentrales übergeordnetes System möglich.

Der mittlere Eingangskanal wird gesteuert von einem Codeleser 306 mit einem zugeordneten mit dem Greiferarm oder dessen Zinken verbundenen Abtaster 307, der eine an der Palette oder an einer Zwischenlage vorgesehene Codierung abliest und über einen Code-Adress-Umsetzer 308 zum Entschlüsseln der aufgefundenen Codierungen und Ausgabe der Adresse der zugeordneten Befehlssequenz im Speicher 301 zuführt. Auf diese Weise wird durch Erfassen der Codierung ein entsprechendes Transportschema selbsttätig ausgewählt und über einen Puffer 309 an einen Block 310 zur Wegoptimierung weitergegeben. Die Steuersignale für zwei Greifer gelangen an einen Block "Wegführung" 311, der die einzelnen Transportbefehle in konkrete Steueranweisungen für die Bewegung der Arme und Greiferteile umsetzt. Ein erster Greifer I und ein zweiter Greifer II sind über entsprechende Ansteuerschaltungen 312 und 313 mit der Wegführung 311 verbunden.

Zur Koordinierung und Sicherung der Greiferbewegungen erfolgt zunächst eine Verriegelung 314, welche ein koinzidierendes Überschneiden der Greiferbewegungen sperrt. Ein in den Bewegungsbereich beim Ausführen eines Transportbefehls eindringender zweiter Greifarm wird gesperrt, bis der erste Greifer den Bereich verlassen hat. Mit dieser Sicherheitssteuerung ist eine einfache Koordinierung der Bewegungen mehrerer Greifer möglich. Um aber auch eine zeitliche Optimierung zu erzielen, ist eine "Vorausschau" günstig, welche künftige Greiferbewegungen einbezieht. Da die Greiferbewegungen jeweils nach einem vorgegebenen Schema ablaufen, werden bei Ausführung eines aktuellen Transportbefehls die nächsten Befehle in der Reihe bereits in den Puffer 309 geladen, der für jeden Greifer ein separates Schieberegister enthält, dessen einzelne Speicherpositionen separat adressier- und veränderbar sind. Es handelt sich also um ein Schieberegister, dessen Eigenschaften über diejenigen kommerziell in integrierter Form erhältlicher entsprechender Register hinausgeht und deshalb in speicherprogrammierter Form realisiert ist.

Unter Berücksichtigung der zu den einzelnen Transportbefehlen gehörigen Verarbeitungszeitinformation, wird die Überschneidung bei künftigen Transportbefehlen errechnet und bei einer festgestellten Überschneidung ein späterer Befehl vorgezogen, bei dem keine Überschneidung stattfindet. Hierzu ist noch eine weitere bei einem Transportbefehl abgespeicherte Zusatzinformation auszuwerten, welche besagt, um wie viele Schritte ein betreffender Transportbefehl maximal vorgezogen werden kann, um ausführbar zu sein. Hierbei können aber auch weitere Bedingungen festgehalten sein, die für die Bearbeitung eine Rolle spielen können. In der Praxis wird bei der Palettierung oder Depalettierung ein Transportbefehl ohne weiteres vorgezogen werden können, der einen Stapel betrifft, der in der gerade abzuarbeitenden Reihe gelegen ist. Bei der koordinierten Ausführung von Transportaufgaben mit zwei oder mehreren Greiferarmen können dabei Aufgaben des einen Armes an den anderen übertragen werden, um im Rahmen der Optimierung auftretende Zeitbegünstigungen des einen oder des anderen Arms ausgleichen zu können. Hierzu werden diejenigen Hilfsinformationen ausgewertet, welche die Zuordnung der Ausführung von Transportbefehlen durch den einen oder den anderen Arm betreffen.

**Patentansprüche**

1.  Greifvorrichtung für eine automatische Handhabungsvorrichtung mit zwei in einem Abstand voneinander angeordneten, Tragelemente bildenden Zinken (101, 102), die im wesentlichen horizontal und parallel gerichtet sind, und einem senkrecht zu den Zinken (101, 102) in Richtung auf diese zu verschiebenden Gegenelement (103), welches beim Ergreifen eines zu handhabenden Stapels an dessen Deckfläche anliegt, wobei die sich zwischen den beiden Zinken (101, 102) quer erstreckende Abmessung des Gegenelements (103) kleiner ist als der senkrechte Abstand zwischen den Zinken (101, 102),
    **dadurch gekennzeichnet,**
    daß zum Transport eines flexiblen Folien- oder Heftstapels (S) durch Anpressen des Gegenelements (103) und dessen Bewegung in Richtung auf den von den beiden Zinken (101, 102) unterstützten Stapel (S) ein Überhub erzeugt wird, so daß beim Ergreifen des Stapels (S) eine diesen stabilisierende Wölbung um eine parallel zur Zinkenrichtung gerichtete Achse eintritt.

2.  Greifvorrichtung nach Anspruch 1, **dadurch gekennzeichnet**, daß die beiden Zinken (101, 102) und das Gegenelement (103) derartig angetrieben sind, daß sie beim Greifen bzw. Lösen gleichzeitig Relativbewegungen aufeinander zu bzw. voneinander weg ausführen.

3.  Greifvorrichtung nach einem der vorangehenden Ansprüche, **dadurch gekennzeichnet**, daß die Zinken (101, 102) um eine zweite Drehachse angetrieben schwenkbar sind, die parallel zu einer die ersten beiden Zinken (101, 102) senkrecht schneidenden Verbindungslinie gerichtet und in Richtung auf das Gegenelement (103) verschoben ist.

4.  Greifvorrichtung nach einem der vorangehenden Ansprüche, **dadurch gekennzeichnet**, daß die Zinken (101, 102) jeweils mit einer rechtwinklig zu den Zinken (101, 102) gerichteten Gabelstange (112, 113) verbunden sind, die mit einer eine erste Drehachse (121) bildenden, in einem Lager (108) drehbar angeordneten Achse (114) verbunden sind.

5.  Greifvorrichtung nach Anspruch 4, **dadurch gekennzeichnet**, daß die Verbindung der Zinken (101, 102) mit der Gabelstange (112, 113) ein Gelenk (110, 111) aufweist, so daß die Zinken (101, 102) passiv in Richtung auf das Gegenelement (103) schwenkbar sind, in der Gegenrichtung aber in der horizontalen Position durch einen Anschlag begrenzt sind.

6.  Greifvorrichtung nach einem der Ansprüche 3 bis 5, **dadurch gekennzeichnet**, daß an der dem freien Ende der Zinken (101, 102) gegenüberliegenden Seite ein relativ zur Zinkenbewegung festehender Anschlagbereich (118) vorgesehen ist, der sich in Richtung auf die zweite Drehachse erstreckt.

7.  Greifvorrichtung nach einem der vorangehenden Ansprüche, **dadurch gekennzeichnet**, daß eine die Zinken (101, 102) und das Gegenelement (103) haltende Tragvorrichtung (120) für den Greifer (100) um die erste Drehachse (121) aktiv schwenkbar ist, die parallel zu einer die beiden Zinken (101, 102) senkrecht schneidenden Verbindungslinie gerichtet und in Richtung auf das Gegenelement (103) verschoben ist.

8.  Greifvorrichtung nach einem der vorangehenden Ansprüche, **dadurch gekennzeichnet**, daß das Gegenelement (103) als Preßbacken ausgebildet ist, der eine größere Breite als die Zinken (101, 102) aufweist.

9.  Greifvorrichtung nach Anspruch 8, **dadurch gekennzeichnet**, daß die Auflagefläche (104) des Preßbackens (103) in Richtung auf seine Seitenkanten zylindrisch konvex verrundet ist, wobei die Zylinderachse im wesentlichen parallel zu den Zinken (101, 102) gerichtet ist.

10. Greifvorrichtung nach einem der vorangehenden Ansprüche, **dadurch gekennzeichnet**, daß der Zinkenquerschnitt abgeschrägt ausgebildet ist, wobei die Abschrägung in einem Bereich der Kante vorgesehen ist, der sowohl dem jeweils anderen Zinken (101, 102) als auch dem Gegenelement (103) zugewandt ist.

11. Greifvorrichtung nach Anspruch 10, **dadurch gekennzeichnet**, daß die mit der Abschrägung verbundene Querschnittsverringerung zum freien Ende der Zinken (101, 102) hin zunimmt.

12. Greifvorrichtung nach einem der vorangehenden Ansprüche, **dadurch gekennzeichnet**, daß der Greifer (100) eine Anschlußvorrichtung in Form einer Schnellkupplung aufweist.

## Claims

1. Gripping device for an automatic handling mechanism having two prongs (101,102), arranged at a spacing from one another and forming support elements, these prongs being aligned in a substantially horizontal and parallel manner, and a counter element (103) which is to be moved perpendicularly towards the prongs (101,102) and, when a stack is gripped, abuts the top surface of the stack being handled, the transversely extending dimension of the counter element (103) between the two prongs (101,102) being less than the perpendicular spacing between the prongs (101,102), characterised in that, for the transporting of a flexible stack of files or pamphlets (S), by pressing the counter element (103), and the movement thereof towards the stack (S) supported by the two prongs (101,102), an excess movement is produced so that when the stack (S) is gripped a curvature is produced in it about an axis parallel to the direction of the prongs which stabilises it.

2. Gripping device according to claim 1, characterised in that the two prongs (101,102) and the counter element (103) are operated so that during gripping or releasing they simultaneously perform relative movements towards or away from one another.

3. Gripping device according to one of the preceding claims, characterised in that the prongs (101,102) are pivotably driven about a second rotation axis which is arranged parallel to a connecting line which perpendicularly intersects the first two prongs (101,102) and is displaced towards the counter element (103).

4. Gripping device according to one of the preceding claims, characterised in that the prongs (101,102) are each connected to a fork rod (112,113) directed at right angles to the prongs (101,102) the fork rods being connected to a spindle (114) rotatably mounted in a bearing (108) and forming a first rotation axis (121).

5. Gripping device according to claim 4, characterised in that the connection of the prongs (101,102) to the fork rod (112,113) comprises a joint (110,111) so that the prongs (101,102) are passively pivotable towards the counter element (103) but in the horizontal position are restricted in the opposite direction by a stop.

6. Gripping device according to one of claims 3 to 5, characterised in that, at the end opposite the free end of the prongs (101,102), there is a stop region (118), fixed relative to the movement of the prongs, which extends towards the second rotation axis.

7. Gripping device according to one of the preceding claims, characterised in that a carrying device (120) for the gripper (100), said device holding the prongs (101,102) and the counter element (103), is actively pivotable about the first rotation axis (121), which is directed parallel to a connecting line which perpendicularly intersects the two prongs (101,102), and is displaced towards the counter element (103).

8. Gripping device according to one of the preceding claims, characterised in that the counter element (103) takes the form of a pressing jaw which is wider than the prongs (101,102).

9. Gripping device according to claim 8, characterised in that the contact surface (104) of the pressing jaw (103) is rounded in a cylindrically convex configuration towards its side edges, the cylinder axis being directed substantially parallel to the prongs (101,102).

10. Gripping device according to one of the preceding claims, characterised in that the cross section of the prongs is chamfered, the chamfer being provided in a region of the edge which faces both the other prong (101,102) and also the counter element (103).

11. Gripping device according to claim 10, characterised in that the reduction in cross section associated with the chamfer increases towards the free end of the prongs (101,102).

12. Gripping device according to one of the preceding claims, characterised in that the gripper (100) has a connecting mechanism in the form of a quick-acting coupling.

## Revendications

1. Dispositif de préhension pour une installation de manipulation automatique, comportant deux fourchons (101, 102) disposés de manière espacés entre-eux et formant des éléments de support, qui sont orientés de manière à être sensiblement horizontaux et parallèles entre-eux, et comportant également un élément conjugué (103) qui est susceptible de coulisser perpendiculairement aux fourchons (101, 102), en direction de ceux-ci, et qui lors de la saisie d'une pile à manipuler, vient s'appliquer contre la surface supérieure de celle-ci, la dimension de l'élément conjugué (103), mesurée transversalement entre les deux fourchons (101, 102), étant inférieure à la distance entre les fourchons (101, 102), mesurée perpendiculairement à ceux-ci, caractérisé

en ce que pour le transport d'une pile flexible (S) de feuilles ou de cahiers par l'application sous pression de l'élément conjugué (103) et le mouvement de celui-ci en direction de la pile (S) supportée par les deux fourchons (101, 102), on produit une course supplémentaire, de manière à ce que lors de la saisie de la pile (S), apparaisse une courbure de la pile, autour d'un axe orienté parallèlement à la direction des fourchons, cette courbure stabilisant cette pile.

2. Dispositif de préhension selon la revendication 1, caractérisé en ce que les deux fourchons (101, 102) et l'élément conjugué (103) sont entraînés de manière à ce que lors de la préhension ou du desserrage, ils effectuent simultanément des mouvements relatifs les uns en direction des autres ou les uns en s'éloignant des autres.

3. Dispositif de préhension selon l'une des revendications précédentes, caractérisé en ce que les fourchons (101, 102) peuvent être entraînés en pivotement autour d'un premier axe de rotation qui est orienté parallèlement à une ligne de liaison coupant perpendiculairement les deux premiers fourchons (101, 102), et qui est décalé en direction de l'élément conjugué (103).

4. Dispositif de préhension selon l'une des revendications précédentes, caractérisé en ce que les fourchons (101, 102) sont reliés chacun à une tige de fourche (112, 113) orientée perpendiculairement aux fourchons (101, 102), ces tiges de fourche étant reliées à un axe (114) monté tournant dans un palier (108) et formant un premier axe de rotation (121).

5. Dispositif de préhension selon la revendication 4, caractérisé en ce que la liaison des fourchons (101, 102) à la tige de fourche (112, 113) comporte une articulation (110, 111), de sorte que les fourchons (101, 102) peuvent pivoter de manière passive en direction de l'élément conjugué (103), ce mouvement étant toutefois limité dans la direction opposée, à la position horizontale, grâce à une butée.

6. Dispositif de préhension selon l'une des revendications 3 à 5, caractérisé en ce qu'une zone de butée (118), fixe par rapport au mouvement des fourchons, est prévue sur le côté opposé à celui des extrémités libres des fourchons, et s'étend en direction du second axe de rotation.

7. Dispositif de préhension selon l'une des revendications précédentes, caractérisé en ce qu'un dispositif de support (120) pour l'organe de préhension (100) et supportant les fourchons (101, 102) et l'élément conjugué (103), peut pivoter activement autour du premier axe de rotation (121) qui est orienté parallèlement à une ligne de liaison coupant perpendiculairement les deux premiers fourchons (101, 102), et qui est décalé en direction de l'élément conjugué (103).

8. Dispositif de préhension selon l'une des revendications précédentes, caractérisé en ce que l'élément conjugué (103) est réalisé sous la forme d'une joue de serrage présentant une largeur supérieure à celle des fourchons (101, 102).

9. Dispositif de préhension selon la revendication 8, caractérisé en ce que la surface d'appui (104) de la joue de serrage (103) est arrondie de manière cylindrique convexe en direction de ses bords latéraux, l'axe du cylindre étant orienté sensiblement de manière parallèle aux fourchons (101, 102).

10. Dispositif de préhension selon l'une des revendications précédentes, caractérisé en ce que la section droite des fourchons est chanfreinée, le chanfrein étant prévu dans une zone du bord qui fait face aussi bien à l'autre fourchon (101, 102) qu'à l'élément conjugué (103).

11. Dispositif de préhension selon la revendication 10, caractérisé en ce que la réduction de section droite engendrée par le chanfrein, augmente en direction de l'extrémité libre des fourchons (101, 102).

12. Dispositif de préhension selon l'une des revendications précédentes, caractérisé en ce que l'organe de préhension (100) comporte un dispositif de raccordement sous la forme d'un accouplement rapide.

Fig.1a

X Verfahrstrecke = 0-5000 mm

Y=400°

Z=500°

Automatischer Hubtisch

EP 0 377 399 B1

## Fig. 1b

Position
Geb.-Zuführung
variabel

EP 0 377 399 B1

Fig.2

Fig. 3a

Fig. 3b

Fig. 4a

Fig. 4b

Fig.5

EP 0 377 399 B1